Europäisches Patentamt

European Patent Office

Office européen des brevets

(11) Publication number: **0 513 612 A2**

# EUROPEAN PATENT APPLICATION

(21) Application number: **92107506.5**

(51) Int. Cl.5: **G06K 9/46, A61B 5/117**

(22) Date of filing: **04.05.92**

(30) Priority: **07.05.91 JP 131887/91**

(43) Date of publication of application:
**19.11.92 Bulletin 92/47**

(84) Designated Contracting States:
**DE FR GB**

(71) Applicant: **YOZAN INC.**
**3-5-18, Kitazawa, Setagaya-ku**
**Tokyo 155(JP)**

(72) Inventor: **Yamamoto, Makoto, c/o Yozan Inc.**
**3-5-18, Kitazawa, Setagaya-ku**
**Tokyo 155(JP)**

(74) Representative: **Patentanwälte Grünecker,**
**Kinkeldey, Stockmair & Partner**
**Maximilianstrasse 58**
**W-8000 München 22(DE)**

(54) **Fingerprint data registering method.**

(57) The present invention has an object to provide a fingerprint data registering method which can clearly show the characteristics of minutiae storing the information of an original image.

The present invention is characterized by the steps of thinning a fingerprint image, converting a pixel of each part of an image in the image performed thinning into the data of numerical value corresponding to the pattern of the part, and registering the data of numerical value as the pixel.

Fig. 1

```
┌──────────────────────────────┐
│  Input of a Fingerprint Image│ ─── 1-1
└──────────────────────────────┘
               │
               ▼
┌──────────────────────────────┐
│       Noise Reduction        │ ─── 1-2
└──────────────────────────────┘
               │
               ▼
┌──────────────────────────────┐
│      The most Suitable       │ ─── 1-3
│        Binarization          │
└──────────────────────────────┘
               │
               ▼
┌──────────────────────────────┐
│          Thinning            │ ─── 1-4
└──────────────────────────────┘
               │
               ▼
┌──────────────────────────────────────────────┐
│ Generation and Registration of Pattern Data   │ ─── 1-5
└──────────────────────────────────────────────┘
```

EP 0 513 612 A2

EP 0 513 612 A2

**FIELD OF THE INVENTION**

The present invention relates to a fingerprint data registering method for verifying a fingerprint.

**BACKGROUND OF THE INVENTION**

For verifying a fingerprint, a minutiae network method which adopts an end point and a branch point as characteristics values is trustworthy method well supported by results of years. But it is difficult to prevent noise when a fingerprint image is input, and it is necessary to store not only the data of minutiae but also the whole of the image data. The information of original image data is largely lost by the conventional fingerprint verification because only minutiae is extracted. Therefore, it has been necessary to store whole of the original image.

**SUMMARY OF THE INVENTION**

The present invention is invented so as to solve the above problems of the prior art and has an object to provide a data registering method which clearly shows characteristics of minutiae, storing the information of an original data in maximum.

A data registering method according to the present invention performs thinning on a fingerprint image, converts a pixel of each part into the data of numerical value corresponding to the pattern of the part in the image performed thinning, and registers the data of numerical value as the pixel value of the processed pixel.

It is possible to show clearly the characteristics of minutiae, storing a pattern performed thinning of each part of an image by the fingerprint data registering method according to the present invention.

**BRIEF DESCRIPTION OF THE DRAWINGS**

Fig. 1 shows a flowchart of an embodiment of a fingerprint data registering method according to the present invention.

Fig. 2 shows a concept for defining the peripheral pixels of a 3 × 3 convolution.

Fig. 3 shows an example of a pattern of an end point.

Fig. 4 shows an example of a pixel arrangement shaped "V".

Fig. 5 shows an example of a pixel arrangement showing the shape "Y".

Fig. 6 shows an example of a pattern of passing through.

Fig. 7 shows an example of a pattern of faintness or scratchiness.

Fig. 8 shows the data structure of registered data.

Fig. 9 shows a pattern of a processing for correcting a registered datum.

**PREFERRED EMBODIMENT OF THE PRESENT INVENTION**

Hereinafter, an embodiment of the fingerprint data registering method according to the present invention is described with reference to the attached drawings.

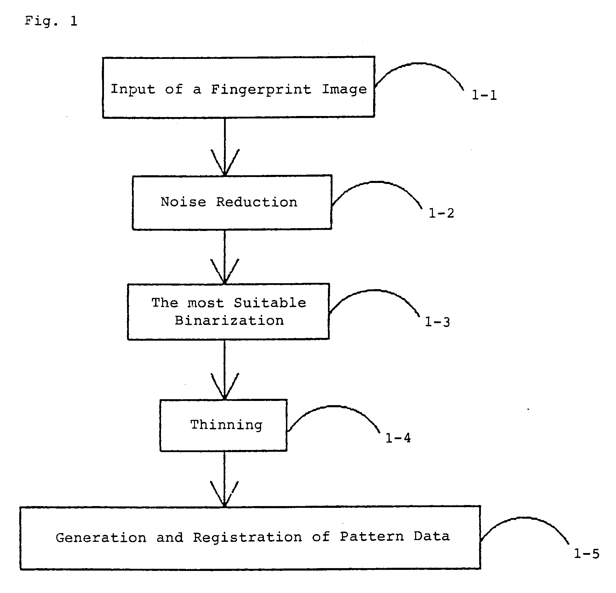

Fig. 1 shows a flowchart of the serial processing from the input of a fingerprint image to the registration of data. A fingerprint image is input on step 1-1, noise is reduced on step 1-2, binarization is performed the most suitably on step 1-3, and thinning is performed on step 1-4, sequentially. Last, data generation and registration is performed using a look up table. The look up table converts the pattern of 3 × 3 convolution performed thinning into the data of numerical value. The data of each pixel after the conversion is registered in an image memory.

Here, the pattern of a fingerprint image performed thinning is shown below.

2

| THE CLASSIFICATION OF THE PATTERN | THE NUMBER OF THE CLASSIFIED PATTERN | THE SET OF THE PIXEL COMBINATED WITH THE CENTER PIXEL TO SHOW THE PATTERN |
|---|---|---|
| End Point | 8 | 0, 1, 2, 3, 4, 5, 6, 7 |
| Pixel Arrangement Shaped "V" | 24 | 0-1, 0-2, 0-3, 0-5, 0-6, 0-7, 1-2, 1-3, 1-4, 1-6, 1-7, 2-3, 2-4, 2-5, 2-7, 3-4, 3-5, 3-6, 4-5, 4-6, 4-7, 5-6, 5-7, 6-7 |
| Pixel Arrangement Shaped "Y" | 15 | 0-2-4, 0-2-5, 0-2-6, 0-3-5, 0-3-6, 0-4-6, 1-3-5, 1-3-6, 1-3-7, 1-4-6, 1-4-7, 1-5-7, 2-4-6, 2-4-7, 3-5-7 |
| Passing Through | 4 | 0, 1, 2, 3 |

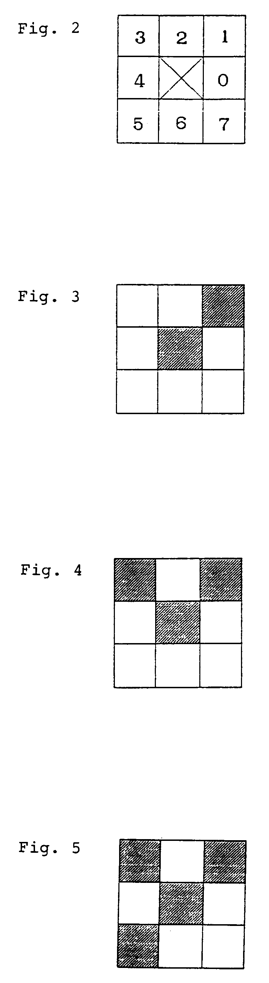

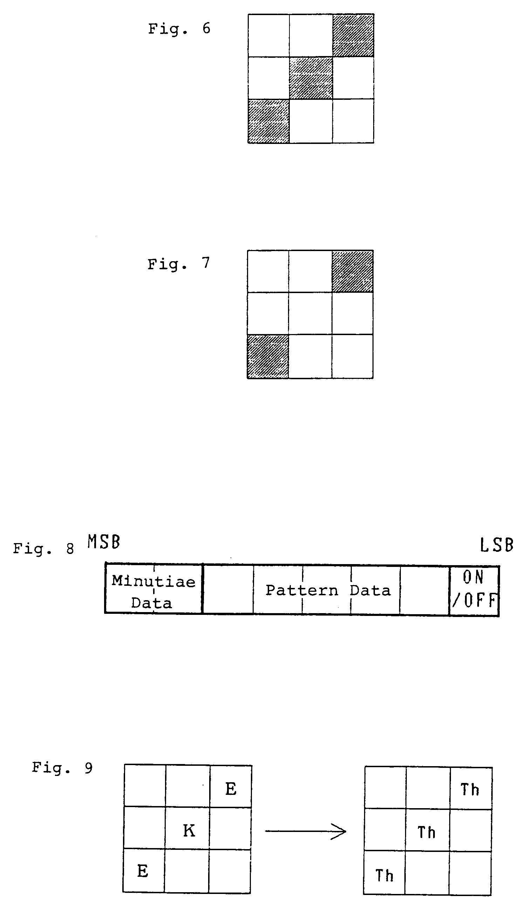

The pattern performed thinning with respect to $3 \times 3$ convolution can be shown by the pattern formed by the peripheral pixels neighboring the center pixel (shown by "0" to "7" in Fig. 2). The above table indicates the elements of directions using the number of peripheral pixels. For example, the end point of direction "1" shows the pattern in Fig. 3. In the same way, pixel arrangement shaped "V" of direction "1-3" shows the pattern in Fig. 4, pixel arrangement shaped "Y" of direction "1-3-5" shows the pattern in Fig. 5, and the pattern of passing through of direction 1 (which does not show minutiae) is shown in Fig. 6.

Fig. 6 is generated by disappearing one pixel on a line of the pattern in fig. 5 because of faintness or scratchiness. Such pattern is usually called pseudo-characteristic point, which should be excluded from characteristics points. 1 and 5 are usually regarded to be end points in the pattern.

The data to show if the center pixel is a configuration pixel or not ("ON/OFF data", hereinafter) and if it is a peripheral pixel or not are defined so as to identify a datum with the patterns above. The pattern datum formed by peripheral pixel is examined if it is a characteristic point or not and is regarded as the combination of the data showing the kind of characteristics point ("minutiae data", hereinafter) and the data showing the shape of the pattern ("pattern data", hereinafter).

The combination of such data can be expressed by 8 bits data below.

1) Upper 2 Bits

These information show that the pattern is one of the kinds of patterns of end point, pixel arrangement shaped "V", pixel arrangement shaped "Y", and passing through. The definitions shown below is an example. In this classification, it is not the problem if the center pixel is a configuration pixel or not. Therefore, the patterns in Fig. 6 and Fig. 7 are the ones of passing through.

"00" shows the pattern of passing through. "01" shows an end point. "10" shows the pixel arrangement showing "V". "11" shows the pixel arrangement showing "Y".

It is clear if a pixel is a characteristic point or not and which characteristic point it belongs to by examining upper 2 bits using these definitions.

2) 5 Bits from Third Bit to Seventh Bit from MSB

These information show the pattern of peripheral pixels of the characteristic point defined by the upper 2 bits. There are 24 kinds of pixel arrangements showing "V", whose number of the kinds of pattern is the most. All of 24 kinds of pattern can be defined by 5 bits data.

Storing these data, a pattern of a pixel performed thinning can be reproduced completely.

3) LSB 1 Bit

If the center pixel is a configuration pixel or not is indicated by LSB. It means that the upper 7 bits does not indicate whether the center pixel is a configuration pixel or not. Therefore in the upper 7 bits, the pattern of passing through in Fig. 6 and the faint or scratchy pattern in Fig. 7 are completely the same. Concerning to the image including a lot of minute faintness or scratchiness, the same effect of noise reduction can be obtained by examining the upper 7 bits.

Fig. 8 shows the above structure of data conceptually.

Registering such data, it is possible not only to extract characteristics and reduce noise extremely easily but also to reproduce completely the image performed thinning.

With respect to the pseudo-characteristic point above, the data given to a pixel can be corrected according to the condition of peripheral pixels so as to process in the way of the present invention.

In the pattern in Fig. 3, for example, the center pixel is recognized to be an end point. The data of an end point should be corrected when the end point is found to be a pseudo-characteristic point due to the faintness or scratchiness in Fig. 7. Fig. 9 shows the correction. When faintness or scratchiness (shown by "K") exist between end points (shown by "E"), the end point, faintness and scratchiness is changed to be "passing through" (shown by "Th").

As mentioned above, it is possible to show clearly and easily the characteristics of minutiae storing the patterns of parts of an image performed thinning since the fingerprint data registering method according to the present invention performs thinning on a fingerprint image, converts the pixel of each part of the image into the data of numerical value corresponding to the pattern of the part, and registers the data of numerical value as the value of the pixel.

## Claims

1. A fingerprint data registering method comprising steps of thinning a fingerprint image, converting each pixel of said image into a datum of numerical value corresponding to a pattern of said pixel, and registering data of numerical value as a pixel.

2. A fingerprint data registering method claimed in Claim 1, wherein said data of numerical value is 7 bits data.

3. A fingerprint data registering method claimed in Claim 1, wherein said data of numerical value is 8 bits data.

4. A fingerprint data registering method claimed in Claim 1, wherein a bit to show minutiae is set in said data of numerical value.

5. A fingerprint data registering method claimed in Claim 1, wherein a bit to show a kind of minutiae is set in said data of numerical value.

6. A fingerprint data registering method claimed in Claim 1, wherein a bit to show if an object pixel is a configuration pixel or not is included in said data of numerical value.

Fig. 1

```
┌─────────────────────────────────────┐
│   Input of a Fingerprint Image      │ ⟩ 1-1
└─────────────────────────────────────┘
                  │
                  ▼
      ┌───────────────────────┐
      │   Noise Reduction      │ ⟩ 1-2
      └───────────────────────┘
                  │
                  ▼
      ┌───────────────────────┐
      │  The most Suitable     │ ⟩ 1-3
      │     Binarization       │
      └───────────────────────┘
                  │
                  ▼
        ┌─────────────────┐
        │    Thinning      │ ⟩ 1-4
        └─────────────────┘
                  │
                  ▼
┌─────────────────────────────────────────────┐
│ Generation and Registration of Pattern Data │ ⟩ 1-5
└─────────────────────────────────────────────┘
```

Fig. 2

| 3 | 2 | 1 |
|---|---|---|
| 4 | ✕ | 0 |
| 5 | 6 | 7 |

Fig. 3

Fig. 4

Fig. 5

Fig. 6

Fig. 7

Fig. 8 MSB                                                    LSB

| Minutiae Data | | Pattern Data | | ON /OFF |
|---|---|---|---|---|

Fig. 9